# DEMANDE DE BREVET EUROPEEN

(11) **EP 4 574 550 A1**
(43) Date de publication de la demande: **25.06.2025**
(21) Numéro de dépôt: 24218764.9
(22) Date de dépôt: 10.12.2024
(51) Int. Cl.: B60L 53/66, B60L 53/67, B60L 53/68

(54) **PROCÉDÉ DE GESTION DU RÉAPPROVISIONNEMENT EN SOURCE D'ÉNERGIE D'UN VÉHICULE AUTOMOBILE**

(30) Priorité: 22.12.2023 FR 2315105
(71) Demandeur: Ampere SAS, 92100 Boulogne-Billancourt (FR)
(72) Inventeur: AZZAZ, Billel, 78084 Guyancourt cedex (FR)
(74) Mandataire: Renault Group

(57) **Abrégé**

Procédé et système de gestion du réapprovisionnement en source d'énergie d'un véhicule automobile ego comprenant la compilation de données externes au véhicule ego par un serveur distant ou par un véhicule secondaire connecté distinct du véhicule ego, l'acquisition de données internes, propres au véhicule ego et la détermination d'un itinéraire, prévoyant un réapprovisionnement, en fonction des données externes et des données internes.

## Description

L'invention concerne un procédé de gestion du réapprovisionnement en source d'énergie, notamment en carburant ou en source d'énergie électrique, d'un véhicule automobile. L'invention porte également sur un système de gestion apte à mettre en oeuvre un tel procédé. L'invention porte encore sur véhicule équipé d'un tel système.

Dans le milieu automobile, il est connu de gérer le réapprovisionnement, aussi qualifié d'approvisionnement, en source d'énergie d'un véhicule du type carburant ou énergie électrique par l'intermédiaire de systèmes aptes à informer un conducteur de la position et des tarifs propres à différentes stations d'approvisionnement. De tels systèmes sont notamment intégrés ou associés à des systèmes de navigation et utilisent classiquement des informations issues de sites internet ou applications, transmises à des serveurs distants. Il en résulte que la disponibilité, l'actualisation et/ou la précision de telles données peu(ven)t être limitée(s).

L'invention s'inscrit dans ce contexte et vise à proposer un procédé et un système de gestion du réapprovisionnement en source d'énergie d'un véhicule permettant une exploitation et un enrichissement optimisées des données disponibles à un véhicule circulant dans l'infrastructure routière.

L'invention concerne un procédé de gestion du réapprovisionnement en source d'énergie d'un véhicule automobile ego comprenant :
- la compilation de données externes au véhicule ego et à des véhicules secondaires, distincts du véhicule ego et présents dans l'infrastructure routière, par un serveur distant et/ou par un véhicule secondaire connecté de l'infrastructure routière, lesdites données externes étant issues d'au moins une ressource en ligne et d'au moins un véhicule secondaire connecté ;
- la réception, par le véhicule ego, des données externes par l'intermédiaire d'un module de communication ;
- l'acquisition de données internes, propres au véhicule ego, mesurées et/ou estimées par l'intermédiaire d'un module d'acquisition de données ;
- la détermination d'un itinéraire de réapprovisionnement, prévoyant au moins un réapprovisionnement en source d'énergie, en fonction des données externes et des données internes.

Optionnellement, le procédé comprend, en outre, l'acquisition de données relatives à l'environnement extérieur par le véhicule ego et la transmission, par l'intermédiaire du module de communication, desdites données vers le serveur distant et/ou vers au moins un véhicule secondaire connecté circulant dans l'infrastructure routière.

Par exemple, les données externes sont relatives au prix d'approvisionnement en au moins une source d'énergie, à une durée ou distance séparant le véhicule ego d'au moins une station d'approvisionnement, à une disponibilité en source d'énergie, à une durée de réapprovisionnement, à l'infrastructure routière, à des conditions météorologiques et/ou au trafic.

Notamment, les données internes sont relatives à un itinéraire initial préprogrammé du véhicule ego, à un niveau de source d'énergie, à une autonomie du véhicule ego, à un poids du véhicule ego et/ou à des paramètres de maintenance préventive.

Selon un exemple d'exécution, les données internes et les données externes sont chacune associées à un indice de confiance, correspondant à un degré de précision ou de fiabilité desdites données, la détermination de l'itinéraire de réapprovisionnement prenant en compte un tel indice.

Optionnellement, les données internes et les données externes sont chacune associées à un indice d'importance, correspondant à un degré de priorité desdites données prédéfini par le constructeur ou le conducteur, la détermination de l'itinéraire de réapprovisionnement prenant en compte un tel indice.

Notamment, la détermination d'un itinéraire de réapprovisionnement comprend la génération d'une pluralité d'itinéraires de réapprovisionnement et la sélection automatisée de l'un desdits itinéraires en fonction d'au moins un critère prédéfini.

Optionnellement, les données externes sont actualisées en temps réel ou à intervalle de temps régulier, le procédé comprenant une actualisation de la détermination d'un itinéraire de réapprovisionnement et/ou l'émission d'une alerte, à l'attention du conducteur du véhicule ego, par l'intermédiaire d'une interface Homme-machine.

Par exemple, le message d'alerte est un message sonore et/ou visuel et/ou haptique à l'attention d'un conducteur du véhicule ego communiqué par l'intermédiaire d'un module d'alerte.

L'invention concerne également un système de gestion du réapprovisionnement en source d'énergie d'un véhicule automobile, le système comprenant des éléments matériels et/ou logiciels mettant en oeuvre le procédé selon l'invention. Les éléments matériels comportent au moins une unité de traitement de données, un module de communication et un module d'acquisition de données internes et externes au véhicule.

L'invention s'étend également à un véhicule automobile équipé d'un système de gestion selon l'invention.

L'invention peut également s'étendre à un produit programme d'ordinateur comprenant des instructions de code de programme enregistrées sur un support lisible par ordinateur pour mettre en oeuvre les étapes du procédé selon l'invention lorsque ledit programme fonctionne sur un ordinateur. Autrement dit l'invention peut s'étendre à un produit programme d'ordinateur téléchargeable depuis un réseau de communication et/ou enregistré sur un support de données lisible par un ordinateur et/ou exécutable par un ordinateur comprenant des instructions qui, lorsque le programme est exécuté par l'ordinateur, conduisent celui-ci à mettre en oeuvre le procédé selon l'invention.

La présente invention porte encore sur un support d'enregistrement de données, lisible par un ordinateur, sur lequel est enregistré un programme d'ordinateur comprenant des instructions de code de programme de mise en oeuvre du procédé de configuration selon l'invention, ou encore un support d'enregistrement lisible par ordinateur comprenant des instructions qui, lorsqu'elles sont exécutées par un ordinateur, conduisent celui-ci à mettre en oeuvre le procédé tel qu'exposé ci-dessus.

Enfin, l'invention peut s'étendre à un signal d'un support de données, portant le produit programme d'ordinateur selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
[Fig. 1] La figure 1 est une vue schématique d'un mode de réalisation d'un véhicule équipé d'un système de gestion du réapprovisionnement en source d'énergie d'un véhicule automobile ego
[Fig. 2] La figure 2 est un ordinogramme général d'un exemple d'exécution d'un procédé de gestion du réapprovisionnement.
[Fig. 3] La figure 3 est une représentation schématique d'un exemple d'exécution alternatif du procédé de gestion du réapprovisionnement.
[Fig. 4] La figure 4 est une représentation schématique d'un exemple de communication de données mise en oeuvre entre le véhicule ego, un véhicule secondaire et un serveur distant.

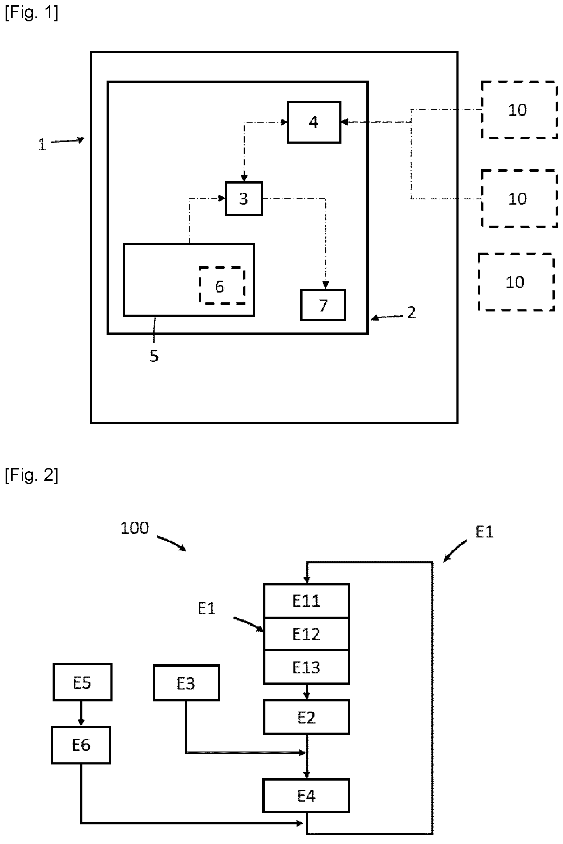

La figure 1 illustre schématiquement un mode de réalisation d'un véhicule 1 équipé d'un système de gestion du réapprovisionnement en source d'énergie selon l'invention. On entend par « source d'énergie » du carburant ou de l'énergie électrique. Le véhicule 1 peut ainsi être un véhicule 1 à motorisation électrique, hybride ou thermique.

Dans l'ensemble de la description ci-après, on qualifiera de véhicule ego un véhicule 1 équipé d'un système de gestion 2 du réapprovisionnement en source d'énergie et apte à mettre en oeuvre un procédé de gestion 100 de l'approvisionnement selon l'invention. Le système de gestion 2 peut être compris dans un système de navigation équipant le véhicule 1 ou peut communiquer avec un tel système de navigation. Le véhicule 1 ego peut être de tout type, par exemple un véhicule particulier, un véhicule utilitaire, un car ou bus. Également, le véhicule peut être un véhicule autonome ou non.

Le véhicule ego est à distinguer d'un véhicule secondaire 10 correspondant à un véhicule distinct du véhicule ego circulant dans l'infrastructure routière. Il est entendu que les termes « véhicule ego » et « véhicule secondaire » visent à distinguer des véhicules distincts et non à établir une hiérarchie d'importance.

Le système de gestion 2 comprend des éléments matériels et/ou logiciels aptes à mettre en oeuvre le procédé selon l'invention. Les éléments matériels comportent au moins une unité de traitement 3 de données, un module de communication 4, notamment apte à communiquer avec un appareil, un véhicule cible et/ou un serveur distant 8, et un module d'acquisition 5 de données internes et externes au véhicule ego.

Optionnellement, le système de gestion 2 comprend, en outre :
- un moyen de localisation 6 du véhicule ego dans une infrastructure routière ;
- un module d'alerte 7 du conducteur.

L'unité de traitement 3 comprend un ou plusieurs élément(s) de mémoire et un calculateur comportant des ressources matérielles et logicielles, notamment au moins un processeur, ou microprocesseur, coopérant avec le ou les élément(s) de mémoire. Le calculateur est apte à exécuter des instructions pour la mise en oeuvre d'un programme d'ordinateur et à recevoir des données issues de divers équipements équipant le véhicule 1 considéré.

Le module de communication 4 est configuré de sorte à émettre et recevoir un flux de données au moyen d'une liaison sans fil, basse fréquence ou haute fréquence. Il peut, par exemple, s'agir d'une liaison sans fil basée sur des technologies « cellulaire» ou « Wifi ». Notamment, lesdites données peuvent être envoyées directement à destination d'un véhicule secondaire 10 connecté circulant dans l'infrastructure routière afin de mettre en oeuvre une communication inter-véhicules, aussi qualifiée de communication V2V pour « vehicle to vehicle ». Additionnellement, le module de communication 4 est apte à communiquer avec un serveur distant 8 apte à diffuser des données à des véhicules secondaires 10 et au véhicule ego circulant dans l'infrastructure routière afin de mettre en oeuvre une communication véhicule-serveur, ou cloud, aussi qualifiée de V2C pour « vehicle to cloud ». Optionnellement, des données peuvent être envoyées vers un centre de gestion 8a des données avant d'être envoyées vers le serveur distant 8. Optionnellement encore le module de communication 4 est apte à communiquer avec des éléments d'infrastructure routière connectés afin de mettre en oeuvre une communication V2I pour « vehicle to infrastructure ».

De manière générale, le moyen de communication est ainsi configuré pour communiquer avec tout type d'élément connecté de sorte à mettre en oeuvre une connexion de type « V2X ».

Le moyen de localisation 6 est apte à localiser le véhicule ego dans l'infrastructure routière. Il intègre, par exemple, un système de localisation approximative du véhicule 1 et/ou une cartographie haute définition de l'infrastructure routière. Notamment, la localisation approximative du véhicule 1 peut être fournie par un système de type GPS, de l'acronyme anglais « Global Positioning system ». Alternativement ou en complément, le moyen de localisation 6 peut être un système de localisation embarqué dans le véhicule 1 qui intègre les mouvements du véhicule 1 en permanence.

Le module d'acquisition 5 comprend différents moyens de mesures aptes à extraire des données internes au véhicule 1, par exemple portant sur des paramètres constructeur ou de fonctionnement du véhicule 1, et/ou aptes à extraire des données externes au véhicule ego relatives à l'environnement extérieur au véhicule 1.

Notamment, le module d'acquisition 5 comprend une pluralité de moyens de mesure. Selon un exemple de réalisation, le moyen de localisation 6 est un moyen de mesure d'une distance, d'une vitesse longitudinale, d'une durée et/ou d'une position. Le module d'acquisition 5 comprend également au moins un capteur apte à mesurer, de manière non limitative, au moins l'un parmi une vitesse longitudinale, une autonomie, un niveau de charge et/ou un poids du véhicule ego. Optionnellement, le module d'acquisition 5 comprend plusieurs types de capteurs de données externes, par exemple un capteur d'images, aussi qualifié de moyen de capture d'image, apte à détecter des informations relatives à l'environnement extérieur, notamment à des tarifs de la source d'énergie, des disponibilités desdites sources ou toute information associée disponible affichée dans l'environnement extérieur. Par exemple, un autre type de capteur est capable de détecter, notamment d'une manière continue, le nombre de véhicules autour du véhicule égo ainsi que leurs distances et vitesses relatives. Le module d'acquisition 5 du véhicule ego 1 est ainsi capable de collecter, de manière non limitative, des informations relatives au coût de réapprovisionnement, à la disponibilité des moyens de réapprovisionnement, à l'état de congestion de chaque station de réapprovisionnement, à l'état du trafic routier et/ou à des conditions de la route, tel que davantage exposé ci-après.

De même, tout véhicule secondaire 10 peut être équipé d'un module d'acquisition secondaire 11a, ou tout équivalent, similaire à ce qui a été exposé ci-dessus en référence au module d'acquisition 5 propre au système de gestion 2 selon l'invention.

Le module d'alerte 7 est apte à diffuser un message et/ou un signal sous la forme d'émission :
- sonore, par exemple au moyen d'un haut-parleur, et/ou
- visuelle, par exemple au moyen d'un module d'affichage de type écran, et/ou
- haptique, par exemple au moyen d'un élément apte à émettre des vibrations compris dans le siège conducteur ou au niveau d'au moins un élément de commande du véhicule ego tel que le volant.

Alternativement ou en combinaison, une telle alerte peut être diffusée par l'intermédiaire d'une interface Homme-machine.

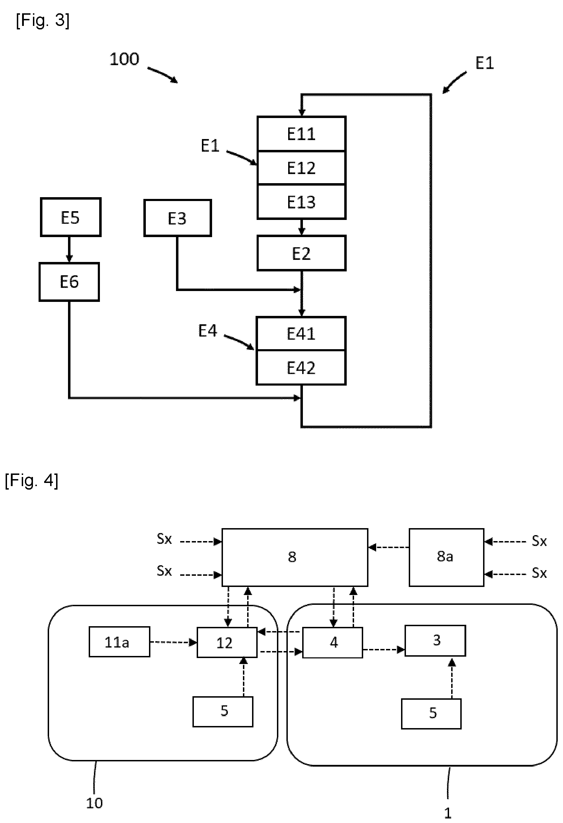

Un exemple d'exécution du procédé de gestion 100 du réapprovisionnement du véhicule 1 est décrit ci-après en référence aux figures 2 à 4. Le procédé de gestion 100 peut être considéré comme étant un procédé de fonctionnement du système de gestion 2 selon l'invention ou comme un procédé de fonctionnement d'un véhicule 1 équipé dudit système.

De manière générale, le procédé de gestion 100 du réapprovisionnement en source d'énergie d'un véhicule 1 automobile ego comprend, dans un premier temps une étape de compilation E1 de données externes dt_ext au véhicule ego et à des véhicules secondaires 10 présents dans l'infrastructure routière par un serveur distant 8 ou par un secondaire 10 connecté de l'infrastructure routière. On entend ici par « compilation » l'accumulation ou la collection des données externes dt_ext, relatives à l'infrastructure routière, par un moyen défini, à savoir ici le serveur ou au moins un véhicule secondaire 10 connecté circulant dans l'infrastructure routière.

Notamment, lesdites données externes dt_ext sont issues d'au moins un véhicule secondaire 10 connecté, distinct du véhicule 1 ego, notamment circulant à proximité de stations-services tel que davantage exposé ci-après, et d'au moins une ressource Sx en ligne sélectionnée parmi un site internet, une base de données, une application ou autre. Les différentes ressources Sx considérées sont notamment, de manière non limitative, les stations d'approvisionnement, aussi qualifiées de stations-services, connectées ou leurs sites, bases de données et applications, les sites comparateurs de prix du carburant ou de l'énergie électrique. Il est entendu que les sources transmettant les données peuvent s'étendre à d'autres installations.

Autrement dit, l'étape de compilation E1 comprend, dans un premier temps, une sous-étape d'acquisition E11 de données externes dt_ext par au moins un véhicule secondaire 10 et/ou une sous-étape de renseignement E12 des données externes dt_ext par un tiers sur au moins une ressource Sx en ligne. Les données sont notamment obtenues, dans le cas du véhicule secondaire 10, par l'intermédiaire d'un module d'acquisition secondaire 11a propre au véhicule secondaire 10, ou tout équivalent, similaire à ce qui a été exposé ci-dessus en référence au module d'acquisition 5 propre au système de gestion 2 selon l'invention. Notamment, les données externes dt_ext sont acquises par l'intermédiaire d'un moyen de capture d'images équipant le véhicule secondaire 10. Les véhicules secondaires 10 contribuent ainsi à la collecte et à l'actualisation des données externes dt_ext.

L'étape de compilation E1 comprend ensuite une sous-étape de transmission E13 des données externes dt_ext acquises ou renseignées au serveur distant 8 et/ou à au moins un véhicule secondaire 10 assurant la compilation E1 de données. Le véhicule secondaire 10 est équipé d'un module de communication secondaire 12, apte à recevoir et/ou transmettre des données de façon similaire à ce qui a été exposé en référence au module de communication 4.

De la sorte au moins une ressource Sx en ligne et au moins un véhicule secondaire 10 émettent des données externes dt_ext, extraites ou renseignées, vers le serveur distant 8 ou vers un véhicule secondaire 10 qui compile les données issues des différentes sources.

Alternativement ou additionnellement, l'étape de compilation E1 est effectuée par au moins un élément d'infrastructure routière connecté et la description ci-dessus s'applique *mutatis mutandis.*

Les données externes dt_ext sont notamment relatives au prix d'approvisionnement en au moins une énergie, à une durée et/ou distance séparant le véhicule ego d'au moins une station d'approvisionnement, à une disponibilité en source d'énergie, à une durée de réapprovisionnement, à l'infrastructure routière, à des conditions météorologiques et/ou à des conditions de trafic. Ces données peuvent également s'étendre à la marque de la source d'énergie ou encore à l'affluence au niveau de station-service.

Les données relatives au prix de réapprovisionnement, à la durée de réapprovisionnement ou à une disponibilité sont par exemple transmises par l'intermédiaire de sites internet ou applications liés à au moins une station-service et/ou par l'intermédiaire de sites internet ou applications de comparateurs de tarifs. Également, ces données peuvent être transmises par au moins un véhicule secondaire 10 connecté mettant en oeuvre la sous-étape d'acquisition E11 de données externes dt_ext décrite plus haut, circulant à proximité d'une station-service et capturant des données extérieures affichées ou renseignées dans l'environnement extérieur.

Les données relatives à l'infrastructure routière peuvent porter sur les conditions de route, les limitations de vitesse et/ou la qualité de la chaussée. Ces données sont, par exemple, transmises par l'intermédiaire de sites, du module d'acquisition 5 du véhicule ego et/ou d'un module d'acquisition secondaire 11a d'un véhicule secondaire 10. Par exemple, ces données sont transmises par l'intermédiaire du moyen de localisation 6 du véhicule ego et/ou d'un équipement équivalent équipé dans un véhicule secondaire 10.

Il en va de même pour des données relatives au trafic routier, communicant notamment des informations relatives à des embouteillages ou incidents dans l'infrastructure routière, ou encore pour des données relatives à des conditions météorologiques dans l'infrastructure routière.

La compilation E1 de données externes dt_ext issues de véhicules secondaires 10 permet avantageusement une actualisation plus régulière des données et une meilleure fiabilité desdites données. Elle permet également la disponibilité de davantage de données que la simple utilisation de données renseignées sur des sites ou applications.

Le procédé comprend ensuite une étape de réception E2, par le véhicule 1 ego, des données externes dt_ext compilées. Les données externes dt_ext sont reçues par l'intermédiaire du module de communication 4 puis transmises à l'unité de traitement 3. Optionnellement, les données externes dt_ext sont enregistrées, au moins de manière temporaire, sur l'au moins un élément de mémoire.

Le procédé comprend également une étape d'acquisition E3 de données internes dt_int, propres au véhicule 1 ego, par l'intermédiaire du module d'acquisition 5. Une telle acquisition correspond à des mesures, détections et/ou estimations de données réalisées préalablement, simultanément ou ultérieurement à la réception E2 de données externes dt_ext.

Les données internes dt_int peuvent être relatives à un itinéraire initial it_ini préprogrammé, une localisation, un niveau de source d'énergie, une autonomie, un poids du véhicule et/ou des paramètres de maintenance préventive du véhicule 1 ego.

Par exemple, la localisation du véhicule 1 ego et des données relatives à un itinéraire initial it_ini préprogrammé du véhicule 1 sont fournies par le moyen de localisation 6. Des informations relatives à un point de départ, une destination un trajet spécifique et/ou au moins un arrêt intermédiaire peuvent alors être communiquées à l'unité de traitement.

L'autonomie du véhicule 1 ego et la quantité de source d'énergie disponible sont déterminés par l'intermédiaire d'au moins un capteur du module d'acquisition 5, tel qu'un voltmètre ou une jauge de carburant. L'autonomie restante du véhicule 1 est notamment déterminée, de manière classique, à partir de la quantité de source d'énergie disponible et de la consommation en temps réel et prévisionnelle du véhicule 1.

Le poids du véhicule 1 une fois chargé est, par exemple, détecté par l'intermédiaire de capteurs de module d'acquisition 5 équipés au niveau d'au moins une suspension du véhicule 1 ego.

Les paramètres de maintenance préventive du moteur sont, par exemple, définis par un seuil minimum de source d'énergie en deçà duquel la quantité de source d'énergie ne doit pas descendre.

Également, les données internes dt_int peuvent être relatives à des préférences de l'utilisateur, renseignées par l'intermédiaire de l'interface Homme-machine ou détectées par apprentissage. Lesdites préférences sont notamment relatives au seuil minimum de source d'énergie, à une ou des marque(s) de sources d'énergie préférentielle(s), à une fréquence de réapprovisionnement préférée, à des tarifs limites ou autre.

Le procédé comprend ensuite une étape de détermination E4 d'au moins un itinéraire de réapprovisionnement it_app, prévoyant au moins un réapprovisionnement en source d'énergie, en fonction des données externes dt_ext et des données internes dt_int préalablement acquises ou reçues.

L'unité de traitement 3 peut ainsi déterminer, sur la base des données externes dt_ext et internes les plus récentes, un itinéraire de réapprovisionnement it_app optimal. Par exemple, l'itinéraire de réapprovisionnement it_app peut être déterminé afin d'optimiser un coût global C_glob du réapprovisionnement. On entend ici par « coût global » la considération du coût financier du réapprovisionnement, de l'importance et la durée d'un détour éventuellement nécessaire, par exemple par rapport à l'itinéraire initial it_ini, de la modification ou non d'un itinéraire initial it_ini, d'un temps d'attente et/ou de réapprovisionnement, impliquant un coût en temps, et d'éventuels coûts de maintenance induit par un vieillissement prématuré du moteur, par exemple en cas de roulage sur des réserves de carburant. Tel que davantage exposé ci-après dans les exemples particuliers d'exécution du procédé, l'au moins un itinéraire de réapprovisionnement it_app peut également, de manière optionnelle, être optimisé en fonction des informations météorologiques et/ou de trafic et/ou des préférences de l'utilisateur.

Selon un exemple d'exécution particulier, optionnel, la détermination E4 de l'au moins un itinéraire de réapprovisionnement it_app est configurée de sorte à être exécutée de manière automatique selon au moins une préférence de l'utilisateur ou par apprentissage afin de minimiser le coût global C_glob de l'itinéraire de réapprovisionnement it_app et/ou du réapprovisionnement en prévoyant un ou plusieurs réapprovisionnement(s) partiel(s). L'itinéraire de réapprovisionnement it_app ainsi déterminé prévoit un premier réapprovisionnement, partiel, à une première station coûteuse en fonction de l'autonomie restante du véhicule 1 et limite ledit réapprovisionnement à ce qui est nécessaire pour atteindre une deuxième station-service, moins coûteuse.

Des critères divers peuvent être intégrés à la génération de l'au moins un itinéraire de réapprovisionnement it_app afin de définir la stratégie la plus économe, la plus courte, la plus confortable en termes de conditions météorologique ou de trafic, en fonction d'horaires de disponibilité de la source d'énergie, de l'affluence et/ou de la marque de la source d'énergie.

Optionnellement, la détermination E4 d'au moins un itinéraire de réapprovisionnement it_app comprend la génération E41 d'une pluralité d'itinéraires it_appx puis la sélection E42, automatisée ou par l'utilisateur, d'un itinéraire de réapprovisionnement it_app parmi ceux générés en fonction d'au moins l'un des critères précités.

De manière optionnelle mais préférentielle, le procédé comprend, en outre, l'affichage de l'au moins un itinéraire de réapprovisionnement it_app par l'intermédiaire de l'interface Homme-machine. Notamment, ladite interface renseigne l'utilisateur sur l'itinéraire de réapprovisionnement it_app déterminé et sur un plan de facturation, récapitulant les différents coûts financiers estimés pour ledit itinéraire.

Également, de manière avantageuse, les données externes dt_ext et les données internes dt_int sont optionnellement actualisées en temps réel ou à intervalle de temps régulier. Le procédé selon l'invention est répété de sorte à permettre une actualisation de l'au moins un itinéraire de réapprovisionnement it_app.

Optionnellement encore, le procédé selon l'invention comprend l'émission d'une alerte à l'attention du conducteur du véhicule 1 ego, par l'intermédiaire de l'interface Homme-machine, lorsque l'au moins un itinéraire de réapprovisionnement it_app actualisé diffère d'un itinéraire de réapprovisionnement it_app proposé lors d'une exécution précédente du procédé selon l'invention et/ou lorsque des données internes dt_int ou externes renseignées à l'utilisateur actualisées diffèrent de données internes dt_int ou externes précédemment utilisées pour définir l'au moins un itinéraire de réapprovisionnement it_app lors d'une exécution antérieure du procédé.

L'unité de traitement 3 est alors apte à enregistrer et comparer au moins un itinéraire de réapprovisionnement it_app et tout ou partie des données internes dt_int et externes dt_ext au véhicule 1 ego entre différentes itérations du procédé selon l'invention. Un message d'alerte est alors émis lorsqu'une différence, notamment une différence ayant un effet significatif sur l'au moins un itinéraire de réapprovisionnement it_app et/ou sur le plan de facturation, est détectée lors de ladite comparaison.

Le message d'alerte est notamment un message sonore et/ou visuel et/ou haptique émis par l'intermédiaire du module d'alerte 7.

La combinaison de données internes dt_int et externes dt_int ainsi que l'utilisation de données issues de véhicules secondaires 10 circulant dans l'infrastructure routière permet avantageusement d'augmenter la quantité de données sur la base desquelles le système de gestion 2 détermine l'au moins un itinéraire de réapprovisionnement it_app et évalue la pertinence de s'arrêter à différentes stations-services considérées en vue d'un réapprovisionnement.

La communication entre un ou plusieurs véhicule(s) secondaire(s) 10 et le véhicule 1 ego, directement ou indirectement, par l'intermédiaire d'un serveur distant 8, assure une disponibilité optimisée des informations et une actualisation plus efficace et régulière de celles-ci. Les données externes dt_ext utilisées sont ainsi plus récentes et fiables. Le système de gestion 2 est ainsi apte à prendre en considération des changements se produisant pendant le trajet du véhicule 1 ego, tel que des changements de tarif, d'affluence, de disponibilité ou autre. Le système est alors apte à recalculer de manière dynamique l'au moins un itinéraire de réapprovisionnement it_app suggéré et/ou le plan de facturation en temps réel ou à intervalle de temps régulier.

Le système de gestion 2 et le procédé de gestion 100 selon l'invention sont optionnellement automatisés de sorte à exécuter la détermination et la sélection de l'itinéraire de réapprovisionnement it_app à appliquer sans intervention de l'utilisateur, soit en privilégiant la solution présentant le coût global C_glob le plus faible, soit en favorisant des critères prédéfinis, renseignés au préalable, tel que détaillé ci-après. Un tel principe permet avantageusement de renforcer la sécurité de la conduite en évitant de distraire le conducteur.

Optionnellement, le procédé de gestion 100 selon l'invention comprend, en outre, une étape d'acquisition de données E5 relatives à l'environnement extérieur par le véhicule 1 ego. Une telle étape s'exécute de façon similaire à ce qui a été décrit précédemment en référence aux véhicules secondaires 10, aussi la description ci-dessus s'applique *mutatis mutandis* au véhicule 1 ego. Une telle acquisition est réalisée simultanément ou suite à l'exécution des étapes décrites précédemment. Le véhicule 1 ego est ainsi apte à participer à la compilation E1 de données externes dt_ext et à l'actualisation desdites données au moyen de son module d'acquisition 5, ce qui bénéficie également à d'autres véhicules présents dans l'infrastructure routière.

Les données externes dt_ext ainsi acquises sont ensuite transmises E6, par l'intermédiaire du module de communication 4, vers le serveur distant 8 et/ou vers au moins un véhicule secondaire 10 connecté présent dans l'infrastructure routière. Tel qu'indiqué précédemment, ces données peuvent être communiquées directement à au moins un véhicule secondaire 10, par l'intermédiaire d'une communication inter-véhicule 1, ou indirectement, par l'intermédiaire du serveur distant 8 et d'une communication V2C.

De manière optionnelle, la transmission E6 des données externes dt_ext à un véhicule secondaire 10, autrement dit la réception E2 desdites données par le véhicule secondaire 10 considéré, peut être réalisée de manière conditionnelle. Par exemple, les données externes dt_ext ne sont transmises à un véhicule secondaire 10 que si celui-ci nécessite un réapprovisionnement en source d'énergie, c'est-à-dire si ledit véhicule secondaire 10 présente un niveau de source d'énergie inférieur ou égal à un seuil prédéfini.

Selon un exemple d'exécution, optionnel, les différents types de données internes dt_int et les données externes dt_ext sont chacun associés à un indice de confiance, correspondant à un degré de précision ou de fiabilité desdites données. La détermination de l'itinéraire de réapprovisionnement it_app est alors exécutée de sorte à prendre en compte un tel indice. Notamment, l'indice de confiance est déterminé en fonction de la récence des données externes dt_ext, du type d'acquisition mis en oeuvre et/ou d'un niveau de répétition, ou de confirmation, de ladite donnée. Par exemple, un type de données récemment actualisé, par exemple après acquisition par un véhicule secondaire 10 ou plusieurs véhicules secondaires 10, quelques minutes avant l'exécution du procédé selon l'invention sera associé à un indice de confiance plus élevé que le même type de données renseignées sur une ressource Sx en ligne, tel qu'un site internet, plusieurs jours avant l'exécution dudit procédé. De même, un même tarif communiqué par plusieurs véhicules secondaires 10 distincts ayant récemment circulé à proximité d'une station-service considérée présentera un meilleur indice de confiance qu'un tarif renseigné par le site internet de ladite station-service plusieurs jours auparavant.

Optionnellement encore, les différents types de données internes dt_int et les données externes dt_ext sont chacun associés à un indice d'importance, correspondant à un degré de priorité desdites données. De tels indices sont prédéfinis par le constructeur et/ou renseignés au préalable par le conducteur ou utilisateur, notamment par l'intermédiaire de l'interface Homme-machine sous la forme de préférences d'exécution. La détermination de l'itinéraire de réapprovisionnement it_app est alors exécutée de sorte à prendre en compte un tel indice. Selon un exemple non limitatif, l'utilisateur peut associer un plus grand indice d'importance au coût financier du réapprovisionnement ou à une marque de source d'énergie définie qu'à l'affluence ou à la durée de réapprovisionnement. L'au moins un itinéraire de réapprovisionnement it_app privilégiera alors une station-service proposant des tarifs moins élevés à une station-service avec moins d'affluence.

L'invention propose ainsi un procédé et système de gestion du réapprovisionnement d'un véhicule permettant d'optimiser le coût global d'un tel réapprovisionnement de manière autonome, économique et fiable. L'invention permet d'assurer une disponibilité et une actualisation adaptées des données nécessaires à une telle gestion.

La présente invention ne saurait toutefois se limiter aux moyens et configurations décrits et illustrés ici et elle s'étend également à tout moyen ou configuration équivalents et à toute combinaison techniquement opérante de tels moyens dans la mesure où ils remplissent *in fine* les fonctionnalités décrites et illustrées dans le présent document.

## Revendications

1. Procédé de gestion (100) du réapprovisionnement en source d'énergie d'un véhicule (1) automobile ego comprenant :
- la compilation (E1) de données externes (dt_ext) au véhicule (1) ego et à des véhicules secondaires (10), distincts du véhicule ego et présents dans l'infrastructure routière, ladite compilation étant effectuée par un serveur distant (8) et/ou par un véhicule secondaire (10) connecté de l'infrastructure routière, les données externes (dt_ext) étant issues d'au moins une ressource (Sx) en ligne et d'au moins un véhicule secondaire (10) connecté ;
- la réception (E2), par le véhicule (1) ego, des données externes (dt_ext) par l'intermédiaire d'un module de communication (4) ;
- l'acquisition (E3) de données internes (dt_int), propres au véhicule (1) ego, mesurées et/ou estimées par l'intermédiaire d'un module d'acquisition (5) de données ;
- la détermination (E4) d'un itinéraire de réapprovisionnement (it_app), prévoyant au moins un réapprovisionnement en source d'énergie, en fonction des données externes (dt_ext) et des données internes (dt_int).

2. Procédé de gestion (100) selon la revendication précédente, comprenant, en outre, l'acquisition de données relatives à l'environnement extérieur par le véhicule (1) ego et la transmission, par l'intermédiaire du module de communication (4), desdites données vers le serveur distant (8) et/ou vers au moins un véhicule secondaire (10) connecté circulant dans l'infrastructure routière.

3. Procédé de gestion (100) selon l'une des revendications précédentes dans lequel les données externes (dt_ext) sont relatives au prix d'approvisionnement en au moins une source d'énergie, à une durée ou distance séparant le véhicule (1) ego d'au moins une station d'approvisionnement, à une disponibilité en source d'énergie, à une durée de réapprovisionnement, à l'infrastructure routière, à des conditions météorologiques et/ou au trafic.

4. Procédé de gestion (100) selon l'une des revendications précédentes dans lequel les données internes (dt_int) sont relatives à un itinéraire initial (it_ini) préprogrammé du véhicule (1) ego, à un niveau de source d'énergie, à une autonomie du véhicule (1) ego, à un poids du véhicule (1) ego et/ou à des paramètres de maintenance préventive.

5. Procédé de gestion (100) selon l'une des revendications précédentes dans lequel les données internes (dt_int) et les données externes (dt_ext) sont chacune associées à un indice de confiance, correspondant à un degré de précision ou de fiabilité desdites données, la détermination de l'itinéraire de réapprovisionnement (it_app) prenant en compte un tel indice.

6. Procédé de gestion (100) selon l'une des revendications précédentes dans lequel les données internes (dt_int) et les données externes (dt_ext) sont chacune associées à un indice d'importance, correspondant à un degré de priorité desdites données prédéfini par le constructeur ou le conducteur, la détermination de l'itinéraire de réapprovisionnement (it_app) prenant en compte un tel indice.

7. Procédé de gestion (100) selon l'une des revendications précédentes dans lequel la détermination d'un itinéraire de réapprovisionnement (it_app) comprend la génération d'une pluralité d'itinéraires de réapprovisionnement (it_app) et la sélection automatisée de l'un desdits itinéraires (it_app) en fonction d'au moins un critère prédéfini.

8. Procédé de gestion (100) selon l'une des revendications précédentes dans lequel les données externes (dt_ext) sont actualisées en temps réel ou à intervalle de temps régulier, le procédé comprenant une actualisation de la détermination d'un itinéraire de réapprovisionnement (it_app) et/ou l'émission d'une alerte, à l'attention du conducteur du véhicule (1) ego, par l'intermédiaire d'une interface Homme-machine.

9. Système de gestion (2) du réapprovisionnement en source d'énergie d'un véhicule (1) automobile, le système comprenant des éléments matériels et/ou logiciels mettant en oeuvre le procédé selon l'une des revendications précédentes, les éléments matériels comportant au moins une unité de traitement (3) de données, un module de communication (4) et un module d'acquisition (5) de données internes (dt_int) et externes au véhicule (1).

10. Véhicule (1) automobile équipé d'un système de gestion (2) selon la revendication précédente.
